Europäisches Patentamt

European Patent Office

Office européen des brevets

(19)

(11) Publication number: **0 371 750**

A1

## (12) EUROPEAN PATENT APPLICATION

(21) Application number: **89312331.5**

(22) Date of filing: **28.11.89**

(51) Int. Cl.5: **B60D 1/52**

(30) Priority: **01.12.88 US 278485**

(43) Date of publication of application:
**06.06.90 Bulletin 90/23**

(84) Designated Contracting States:
**DE FR GB IT SE**

(71) Applicant: **HARWAL MACHINE, INC.**
**P.O. Box 170**
**Gresham Wisconsin 54128(US)**

(72) Inventor: **Harry, Edward G.**
**Route 1**
**Gresham Wisconsin 54128(US)**

(74) Representative: **Goodenough, Nigel et al**
**A.A. Thornton & Co. Northumberland House**
**303-306 High Holborn**
**London WC1V 7LE(GB)**

(54) **Ball hitch assembly.**

(57) A ball hitch assembly providing for interchangeability of different diameter hitch balls without the use of any tools, comprises a centre pin (12) for mounting a hitch ball (30). The centre pin has a circumferential locking groove (58) with an at least partially spiral groove structure (60,62,64) extending from the locking groove (58) to an end of the centre pin. The hitch ball (30) has a central opening (36) with a fixed locking pin (50) extending into the central opening. The fixed locking pin of the hitch ball can be aligned with an entry end (60) of the groove structure and the hitch ball then twisted and advanced onto the centre pin to bring the fixed locking pin into alignment with the locking groove and, thereafter, the hitch ball is rotatably locked to the centre pin until such time as the mounting motions of the hitch ball are reversed to remove the hitch ball from the centre pin.

FIG. 3

## BALL HITCH ASSEMBLY

### Background of the Invention

This invention pertains to a ball hitch assembly and, more particularly, to such an assembly having easily interchangeable hitch balls and with the hitch ball mounted to a center pin whereby the trailer hitch load is placed onto the center pin.

A conventional ball hitch assembly has the hitch ball mounted to a tow bar or other attaching structure of a vehicle and the trailer or other vehicle to be towed has a hitch having a socket adapted to fit over the hitch ball with a latch for holding the parts in assembled relation. Typically, such ball hitch assemblies provide for relatively easy connection and disconnection of the trailer hitch relative to the hitch ball and enable pivoting of the towed trailer or other vehicle through a relatively wide angle about the axis of the hitch ball.

For various reasons, including strength requirements, trailer manufacturers select a particular sized socket for the trailer hitch. It is necessary to have a hitch ball sized rather close to the size of the socket on the trailer hitch and, therefore, it is frequently necessary to change the size of a hitch ball on the towing vehicle when different trailers are to be towed thereby.

Manufacturers offer hitch balls of different diameters. These hitch balls each have an integral threaded stem which enables mounting thereof to a tow bar with retention of the hitch ball by use of a spring lock washer and nut. A pipe wrench is usually required for removal. The end of the threaded stem can become damaged, which renders it difficult to remove the nut for interchange of a hitch ball and also, after a certain amount of exposure, the threaded stem and nut can rust, rendering removal of the nut even more difficult.

The patent art discloses various structures for interchangeability of hitch balls of different diameter without the use of tools. This patent art includes the Hoogenbosch U.S. Patent No. 4,201,400 which discloses a plunger and ball structure for releasably locking a hitch ball to its mounting. The Vance U.S. Patent No. 4,522,421 shows a similar type structure. The Van Vleet et al. U.S. Patent No. 4,596,406 discloses a hitch ball releasably held to a stem by a movable member that can be fitted in aligned openings in the hitch ball and the stem. These structures are subject to breakage, loss of patts and failure to operate due to exposure to weather and foreign material.

None of the known prior art discloses a ball hitch assembly having a hitch ball releasably locked to a center pin by structure not having any moving parts.

According to the present invention there is provided a ball hitch assembly comprising, a centre pin mountable on a tow bar, a hitch ball with a central opening mountable on said centre pin, and a fixed locking pin and groove structure provided one on said centre pin and the other on said hitch ball and including a first groove section enabling rotation of the hitch ball on the centre pin with the locking pin retained in the groove and a second groove section defining an access path for the locking pin to the first groove section by twisting of the hitch ball.

The preferred embodiments of the invention provide new and improved ball hitch assemblies providing for interchangeability of different diameter hitch balls without the use of any special tools and by simple pin and groove structure using a fixed pin whereby there are no moving parts that can fail.

More particularly, a preferred embodiment of the invention provides a ball hitch assembly having a centre pin mountable to a tow bar or other structure and a hitch ball having a central opening with the hitch ball being releasably locked to the centre pin by a coacting fixed locking pin and groove structure associated one with the hitch ball and the other with the centre pin. The groove structure has a circumferential locking groove to releasably hold the fixed locking pin and partially spiral groove means providing for access to the locking groove by a twisting motion of the hitch ball along with movement thereof axially of the centre pin.

In a preferred embodiment of the ball hitch assembly, the fixed locking pin is mounted to the hitch ball and extends into a central opening of the hitch ball and the groove structure is formed about the perimeter of the centre pin. The locking groove extends circumferentially of the centre pin at a distance from an end thereof and with the groove means provides access to the locking groove and has an entry end at said end of the centre pin and spiral and circumferential components extending between the entry end and the locking groove. The circumferential locking groove is generally semicircular in cross section with the fixed locking pin having a smaller spherical end to fit loosely within the locking groove. The centre pin has an external snap ring at a distance from an end of said centre pin to physically locate the hitch ball lengthwise of the centre pin with the fixed locking pin generally centrally positioned within the locking groove to permit free rotation of the hitch ball relative to the centre pin.

The ball hitch assembly enables the interchangeability of hitch balls of different diameters and with all of the hitch balls having the fixed locking pin at the same distance from one end of the hitch ball and with the larger hitch balls having their dimensions shortened in the direction of the central opening thereof whereby each ball has the same postion relative to the external snap ring and the locking groove.

One preferred embodiment of the invention provides a ball hitch assembly enabling ready interchange of different diameter hitch balls, comprising, a plurality of hitch balls of different diameter with each hitch ball having a central opening and a fixed locking pin extending into the central opening a centre pin attachable to a tow bar and having a circumferential locking groove, and additional groove means having an entry end at an end of the centre pin and being at lest partially spiral to lead to the locking groove whereby a fixed locking pin can be placed into and removed from the locking groove by a twisting and axial motion of the hitch ball relative to the centre pin.

Another preferred embodiment of the invention provides a ball hitch assembly comprising, a centre pin mountable on a tow bar, a hitch ball with a central opening mountable on said centre pin, and a fixed locking pin and groove structure provided one on said centre pin and the other on said hitch ball and including a first groove section enabling rotation of the hitch ball on the centre pin with the locking pin retained in the groove and a second groove section defining an access path for the locking pin to the first groove section by twisting of the hitch ball.

Still another preferred embodiment of the invention provides a ball hitch assembly comprising, a centre pin mountable on a tow bar, a hitch ball with a central opening mountable on said centre pin, a locking groove extending circumferentially of said centre pin, a locking pin fixed to said hitch ball and extending into said central opening and of a size to fit loosely in said locking groove while preventing pull-off of the hitch ball, and at least partially spiral groove means on said centre pin extended between an end of the centre pin and said locking groove whereby the hitch ball can be placed in operative position on the centre pin by placement of the locking pin in the groove means at the end of the centre pin and then twisting the hitch ball while moving the hitch ball axially of the centre pin to bring the locking pin to the level of the locking groove.

A particularly preferred embodiment of the invention provides a ball hitch assembly as defined in the preceding paragraph wherein there is an external snap ring on the centre pin to limit movement of the hitch ball axially of the centre pin and place the locking pin in the locking groove intermediate the top and bottom thereof.

A further embodiment of the invention provides a ball hitch assembly as defined in the preceding paragraph wherein a plurality of interchangeable hitch balls of differing diameter may be mounted on the centre pin, with the centre pin having means for locating the smallest. diameter hitch ball lengthwise of the centre pin as provided by the external snap ring. All of the hitch balls have their fixed locking pin at the same distance from one end thereof to establish a common location of said fixed locking pins relative to an end of the centre pin. the larger diameter hitch ball is shortened in the direction of the central opening to have the same length axially of the centre pin as the smallest diameter hitch ball.

The invention will be better understood from the following description of a preferred embodiment thereof, given by way of example only, reference being had to the accompanying drawing, wherein:

## Brief Description of the Drawings

Fig. 1 is a perspective view of the ball hitch assembly, with parts broken away and with one hitch ball shown in full line and a larger diameter hitch ball shown in broken line;

Fig. 2 is a central vertical section of the ball hitch assembly, shown unmounted to a tow bar and having a relatively larger diameter hitch ball mounted to a center pin shown in elevation;

Fig. 3 is a fragmentary view, similar to the upper part of Fig. 2, showing the mounting of a smaller diameter ball to the center pin;

Fig. 4 is a fragmentary elevational view of the upper part of the center pin, looking toward the rear thereof as seen in Fig. 2 and 3.

## Description of the Preferred Embodiment

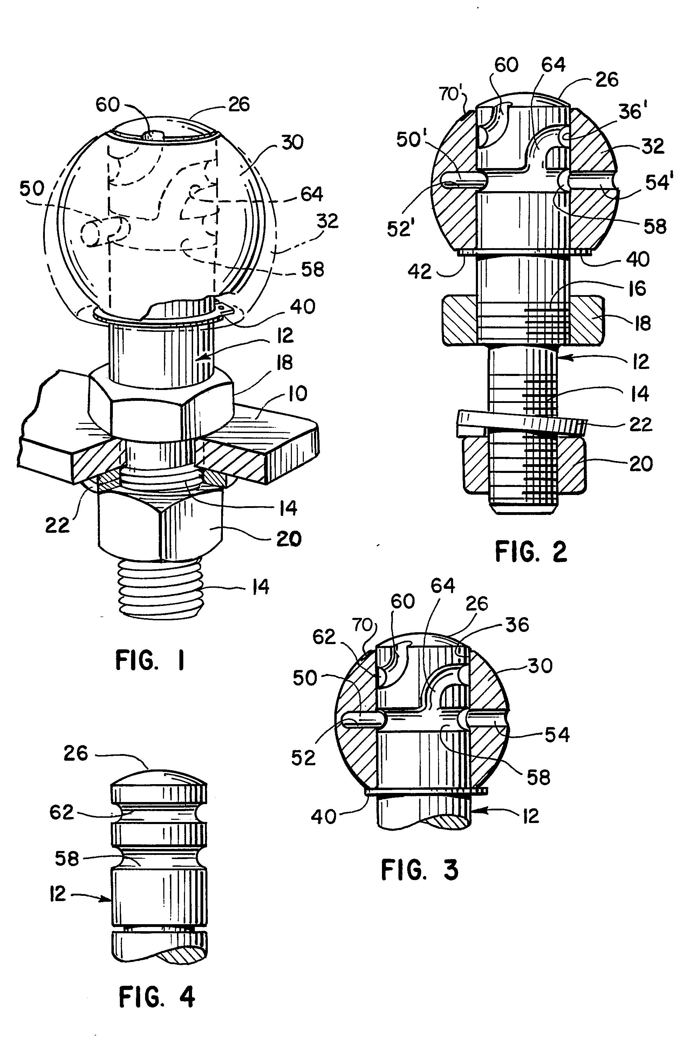

The ball hitch assembly is shown mounted for use in Fig. 1 and is shown mounted to a tow bar 10 of a towing vehicle. The ball hitch assembly includes a center pin 12 having a substantial part of the length thereof threaded with a threaded end 14 and an intermediate threaded section 16 of a larger diameter. The intermediate threaded section 16 mounts a jam nut 18 which locates the center pin 12 relative to the upper side of the tow bar 10. The center pin can be firmly attached by advancing a nut 20 on the threaded section 14 of the center pin to compress the spring lock washer 22 against the underside of the tow bar 10.

An upper end 26 of the center pin 12 has a spherical shape to coact with the shape of a hitch ball to be mounted on the center pin.

In order to illustrate the interchangeability of the hitch balls, two different hitch balls are shown in the drawings, including a hitch ball 30 in Figs. 1 and 3 and a hitch ball 32 of a larger diameter in Fig. 2. The smaller diameter hitch ball 30 is shown in full line in Fig. 1 and the larger diameter hitch ball 32 is shown in broken line in Fig. 1.

Each of the hitch balls is of the same basic structure. Referring to the hitch ball 30, shown in Fig. 3, the hitch ball has a central opening 36 to receive the upper end of the center pin 12. The movement of the hitch ball 30 onto the center pin 12 is limited by means mounted on the center pin in the form of an external snap ring 40 fitted in a groove in the center pin. The positioning of both of the hitch balls 30 and 32 axially of the center pin is the same and with the larger diameter hitch ball 32 being shortened in the direction of the central opening 36', with the resulting formation of a shoulder 42 thereon.

Each of the hitch balls and the center pin have coacting fixed locking pin and groove structure to enable releasable locking of a hitch ball to the center pin with removal and mounting of a hitch ball being accomplished without the use of any tools. The fixed pin and groove structure are associated one with the hitch ball and the other with the center pin. In a preferred embodiment, the fixed locking pin is carried by the hitch ball and the groove structure formed on the periphery of the center pin.

Again referring to the hitch ball 30, a fixed locking pin 50 of hardened metal and having a spherical end is mounted in a recess 52 in the hitch ball. The recess 52 can be formed by drilling, with the drill first making an access hole 54 and then crossing the central opening 36 and drilling the recess 52. The recess 52, not opening to the exterior of the hitch ball, forms a bottom against which the locking pin can be pressed to achieve a fixed mounting thereof in the recess 52.

The center pin 12 has the groove structure including a circumferentially extending locking groove 58 which surrounds the center pin. As seen in Figs. 2 and 3, the locking groove cross section has a diameter greater than the spherical end of the fixed locking pin 50 whereby, with the hitch ball located axially by the external snap ring 40, the spherical end of the locking pin is intermediate the top and bottom of the locking groove. There can be upward movement of the hitch ball 30 along the center pin and away from the external snap ring 40 to some limited extent. The groove structure also includes groove means extending from the spherical end 26 of the center pin to the locking groove 58, with this groove structure including an entry groove section 60 opening to the spherical end of the center pin and extending generally spirally thereof to communicate with a circumferential groove section 62 which extends around substantially the entire circumference of the center pin to terminate in a groove section 64 which extends spirally of the center pin and connects the groove section 62 with the locking groove 58. An alternate construction can have a spiral groove of substantial peripheral extent lead to the locking groove 58 and omit the circumferential groove 62.

The hitch ball can be mounted and removed from the center pin by a twisting motion and movement axially of the center pin. With reference to Fig. 3, a person may place his hand on the hitch ball and rotate the ball in a counterclockwise direction approximately one-quarter revolution to align the fixed locking pin 50 with the groove section 64 and, with a twisting pull on the hitch ball, the hitch ball will then move outwardly of the center pin until the fixed locking pin 50 reaches the circumferential groove section 62. A further twist of more than one-half revolution will bring the locking pin 50 to the groove section 60 to enable removal of the hitch ball from the center pin.

These motions can be reversed to place the hitch ball on the center pin and, with the center pin 50 having its spherical end in the locking groove 58, the hitch ball can rotate through substantially an entire revolution and remain locked. The only location for hitch ball removal is with the locking pin aligned with the groove section 64. The socket of a trailer hitch clamps onto the hitch ball and can pull the hitch ball upwardly a limited amount along the center pin 12.

The trailer hitch rests on the spherical end 26 of the center pin 12 and the ball hitch can only rise to a position tangent with the spherical end. In this position, the spherical end of the fixed locking pin is still loose in the locking groove 58. The hitch balls of different diameters all have the same length axially of the central opening 36 and fixed locking pin 50 at the same distance from the upper and lower ends of the hitch ball. These distances need not be equal and are dependent on the location of the locking groove 58 and the snap ring 40 on the center pin 12.

To assure that the fixed locking pin 50 is remote from the groove section 64 when a trailer hitch is attached to the hitch ball, the hitch ball can have an indent or other marking on its surface, as indicated at 70, to indicate alignment with the fixed locking pin 50 in order to have the hitch ball in a rotative position substantially diametrically opposite the groove section 60, which places the fixed locking pin 50 substantially diametrically opposite the groove section 64.

As previously stated, each of the hitch balls is of the same construction except for differing diameter and, thus, the formation of the shoulder 42 on the hitch ball of the larger diameter. The structure of the hitch ball 32 corresponding to that of hitch ball 30 is given the same reference numeral with a prime affixed thereto.

In summary, there are no tools required to change from one size hitch ball to either a smaller or a larger size hitch ball. The groove structure leading to the locking groove enables the hitch ball to be installed by hand, but when the trailer hitch socket is attached to the hitch ball, the hitch ball cannot detach from the center pin. A vehicle owner wishing to pull different trailers having different trailer hitches may have the suitable diameter hitch balls available and stored in the vehicle, such as in the glove compartment, and mount or interchange a hitch ball when required for a particular trailer hitch.

## Claims

1. A ball hitch assembly comprising, a center pin mountable on a tow bar, a hitch ball with a central opening mountable on said center pin, and a fixed locking pin and groove structure provided one on said center pin and the other on said hitch ball and including a first groove section enabling rotation of the hitch ball on the center pin with the locking pin retained in the groove and a second groove section defining an access path for the locking pin to the first groove section by twisting of the hitch ball.

2. A ball hitch assembly as defined in claim 1 wherein said center pin has an external snap ring to locate said hitch ball lengthwise of the center pin, and said fixed locking pin has an end smaller than the cross section of the first groove section to avoid resisting rotation of the hitch ball on the center pin.

3. A ball hitch assembly as defined in claim 2 wherein said center pin has a part of its length threaded, a jam nut fixed to the center pin, and a spring lock washer and nut at an end of the center pin whereby a tow bar can be captured between said nuts.

4. A ball hitch assembly as defined in claim 1 wherein there are at least two interchangeable hitch balls of different diameter and with the dimension of a larger diameter ball shortened in the direction of said central opening whereby each ball has the same position on the center pin.

5. A ball hitch assembly as defined in claim 4 wherein the fixed locking pin extends inwardly of the central opening of a hitch ball and the groove structure is on the center pin, said fixed locking pin being at the same distance from one end of each of the interchangeable hitch balls, and an external snap ring on the center pin for locating all of the interchangeable hitch balls at the same position lengthwise of the center pin.

6. A ball hitch assembly comprising, a center pin mountable on a tow bar, a hitch ball with a central opening mountable on said center pin, a locking groove extending circumferentially of said center pin, a locking pin fixed to said hitch ball and extending into said central opening and of a size to fit loosely in said locking groove while preventing pull-off of the hitch ball, and at least partially spiral groove means on. said center pin extended between an end of the center pin and said locking groove whereby the hitch ball can be placed in operative position on the center pin by placement of the locking pin in the groove means at the end of the center pin and then twisting the hitch ball while moving the hitch ball axially of the center pin to bring the locking pin to the level of the locking groove.

7. A ball hitch assembly as defined in claim 6 including means on said center pin to limit movement of the hitch ball axially of the center pin to place said locking pin in the locking groove intermediate the top and bottom thereof.

8. A ball hitch assembly as defined in claim 7 wherein said center pin has a partially spherical end and said means on the center pin limiting axial movement is positioned to have said partially spherical end at a height relative to the hitch ball to engage and react the force of a trailer hitch.

9. A ball hitch assembly as defined in claim 8 wherein said means on the center pin for limiting axial movement is an external snap ring.

10. A ball hitch assembly as defined in claim 6 wherein there are a plurality of interchangeable hitch balls of differing diameter, said center pin having means for locating the smallest diameter hitch ball lengthwise of said center pin, all of the hitch balls having their fixed locking pin at the same distance from one end thereof to establish a common location of said one end relative to an end of the center pin and the larger diameter hitch ball being shortened in the direction of the central opening to have the same length axially of the center pin as the smallest diameter hitch ball.

11. A ball hitch assembly enabling ready interchange of different diameter hitch balls, comprising, a plurality of hitch balls of different diameter with each hitch ball having a central opening and a fixed locking pin extending into the central opening, a center pin attachable to a tow bar and having a circumferential locking groove, and additional grove means having an entry end at an end of the center pin and spiral components leading to the locking groove whereby a fixed locking pin can be placed into and removed from the locking groove by a twisting and axial motion of the hitch ball relative to the center pin.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 596 406  (R.D. VAN VLEET)<br>* Whole document *<br>--- | 1,6,11 | B 60 D    1/52 |
| A,D | US-A-4 201 400  (T.C. HOOGENBOSCH)<br>* Whole document *<br>--- | 1,6,11 | |
| A | GB-A-2 155 985  (M.G. VICTORY)<br>* Whole document *<br>----- | 1,6,11 | |
| | | | TECHNICAL FIELDS SEARCHED (Int. Cl.5)<br><br>B 60 D<br>F 16 B |

The present search report has been drawn up for all claims

| Place of search | Date of completion of the search | Examiner |
|---|---|---|
| THE HAGUE | 22-01-1990 | PEMBERTON P.E.E. |